Europäisches Patentamt

(19) European Patent Office      (11) Publication number:      0 108 551

Office européen des brevets                              A1

## (12) EUROPEAN PATENT APPLICATION

(21) Application number: 83306492.6          (51) Int. Cl.³: B 60 K 17/00

(22) Date of filing: 25.10.83

(30) Priority: 30.10.82 GB 8231095

(43) Date of publication of application:
16.05.84 Bulletin 84/20

(84) Designated Contracting States:
DE FR GB IT NL SE

(71) Applicant: Laycock Engineering Limited
Archer Road
Millhouses Sheffield S8 0JY(GB)

(72) Inventor: Kettell, John
5 Marston Close
Dronfield Woodhouse Sheffield S18 5RX(GB)

(74) Representative: Dodd, Graham Marshall et al,
Guest Keen & Nettlefolds Plc. Group Patents and
Licensing Department PO Box 55 Cranford Street
Smethwick Warley West Midlands B66 2RZ(GB)

(54) Vehicle power packs.

(57) A power pack for a motor vehicle, suitable for transverse installation, in which an overdrive planetary gearing (22-26) is incorporated in a flywheel assembly (11, 12) connected to the output shaft of a prime mover so that the flywheel is driven at the same speed as the shaft (28) or at a faster speed. The flywheel carries a conventional clutch (14-20) for disconnection of drive between the flywheel and a conventional change-speed gearbox. The overdrive gearing may be lubricated by oil within an enclosure defined in part by the flywheel.

EP 0 108 551 A1

./...

0108551

GMD/P82.072          VEHICLE POWER PACKS

This invention relates to power packs for motor vehicles. More particularly, the invention relates to a power pack including auxiliary change-speed gearing which may be overdrive gearing, suitable for use in a vehicle having a transversely mounted engine and front wheel drive.

The conventional arrangement of power pack for a front engine, rear wheel drive vehicle with overdrive comprises a prime mover driving a change-speed gear box through a clutch, with an overdrive unit mounted at the output of the change-speed gear box and itself having an output connected to the vehicle propeller shaft. The total length of the prime mover, clutch, gear box and overdrive unit is considerable and usually greater than can be easily accommodated in a transverse engined vehicle. Nevertheless, it may be desired to provide an overdrive in such a vehicle, and it is an object of the present invention to provide for this.

The invention provides a power pack for a motor vehicle, comprising a prime mover, a change-speed gear box, a clutch housing between and connected to the prime mover and change-speed bear box, and a clutch having an associated change-speed gearing arranged in series between the prime mover and gear box, characterised in that said associated change-speed gearing is disposed in the clutch housing with the clutch between said gearing and gear box.

By arranging the change-speed gearing, which may be an overdrive gearing, in the clutch housing with the clutch, relatively little space is occupied by the gearing in comparison with the conventional overdrive unit at the output of a gear box. Thus the power pack can be suitable for transverse mounting in a vehicle.

Preferably the change-speed gearing is incorporated in a flywheel assembly connected to the main output shaft (usually the crankshaft) of the prime mover, and provides for the flywheel to be driven at the same speed as said shaft or at a higher speed.

Said change-speed gearing may comprise an epicyclic gear train, with control means operable selectively to connect and disconnect members of the train together and to prevent one member of the train from rotating.

Preferably the change-speed gearing and control means therefore are disposed in an oil tight enclosure defined in part by said flywheel. This enables the clutch to be a conventional type of dry clutch. If required, the gearing may be arranged to be lubricated from the lubrication system of the prime mover.

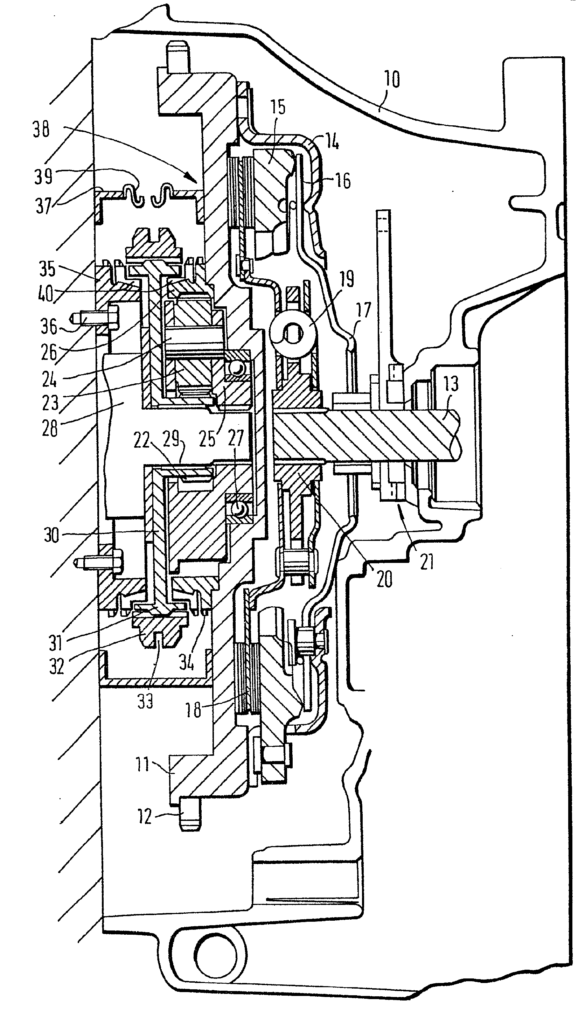

These and other features of the invention will now be described by way of example with reference to the accompanying drawing, which is a cross-section through part of a power pack according to the invention, namely a clutch housing containing a clutch and associated change-speed gearing.

The drawing shows a clutch housing 10, which when installed to form part of a power pack for a motor vehicle is connected to a prime mover at the left hand side of the drawing and a conventional change-speed gear box at the right hand side of the drawing. The housing contains a flywheel 11 provided with a conventional starter ring gear 12, and a conventional diaphragm spring clutch which provides for disconnection of drive between the flywheel 11 and an output shaft 13 which forms or is connected to the input shaft of the change-speed gear box. The clutch itself comprises a cover 14 bolted to the flywheel, a pressure plate 15, a diaphragm spring 16 having release fingers 17, and a driven plate 18 connected by a torsional shock absorber 19 to a hub 20 which is splined to the shaft 13. The driven plate 18 is clamped between the pressure plate 15 and flywheel 11, and the clutch is dis-engaged in known manner by a release mechanism, part of which is shown at 21, which presses on the innermost ends of release fingers 17.

In a conventional clutch installation, the flywheel would be connected directly to the output shaft of the prime mover, normally the crank shaft where the prime mover is an internal combustion piston engine. The invention provides, however, that the flywheel is connected to the output shaft of the prime mover through an epicyclic gear train which provides for the flywheel to be driven at the same speed as the output shaft or at a higher speed.

The epicyclic gear train comprises a sun gear 22, planet gears 23 supported on pins 24 in a planet carrier 25, and an annulus gear 26 which is fixed to the rear face of the flywheel 11. A bearing 27 supports the flywheel relative to the planet carrier 25. The output shaft of the prime mover is indicated at 28, and has an end portion which is splined to the planet carrier 25 to drive same.

The sun gear 22 is carried on shaft 28 by a bush 29, and is connected to a disc like element 30 terminating in a ring 31 which is rotationally fast with an annular sliding dog member 32. The member 32 has a groove 33 for receiving a selector fork, not shown, and is movable axially between a first position in which it connects the ring 31 to the annular gear 26 by way of dog formations 34, and a second position in which it connects the ring 31 to an annular reaction member 35 fixed to the prime mover by bolts 36.

Lubrication of the epicyclic gear train is provided by oil contained within an annular casing 37 fixed to the prime mover. An oil seal, not shown, is provided at 38 where the

4    0108551

casing 37 abuts the rotating flywheel 11. An operating member for moving the sliding dog member 32 enters casing 37 by way of a flexible sealing boot 39. Arrangement may be made for lubricant to enter casing 37 from the lubricating system of the prime mover, possibly by way of a weir arrangement to ensure that the required lubricant level within casing 37 is maintained. No lubricant, however, enters the main part of the clutch housing 10, and the clutch operates in a lubricant free environment.

As has already been pointed out, the clutch is of conventional design. In particular, the driven plate assembly 18, 19, 20 thereof is of conventional type, and there is no increase in the inertia of the output shaft 13 which forms or is connected to the input shaft of the change-speed gearbox of the power pack. The synchronising mechanism of the gearbox does not have to cope with additional inertia, as would be the case if the overdrive gearing were disposed between the clutch and gearbox.

In use, when the sliding dog member 32 is in its first position, which is farthest to the right with reference to the drawing, the sun gear and annulus gear of the epicyclic gear train are locked together. The flywheel thus rotates at the same speed as the shaft 28. When the member 32 is in its second position, to the left of the drawing, the sun gear 22 is held stationary to the reaction member 35. In this condition, the flywheel is driven at a faster speed than shaft 28 to provide an overdrive action. In the drawing, the member 32 is shown in the intermediate position in which it occupies only momentarily between engagement with the reaction member 35 and the annulus gear 26.

The mode of engagement between the sliding dog member 32 and the annulus gear 26 or reaction member 35 is of a synchromesh type. Thus there are separate dog rings 40 having synchronising frusto-conical surfaces, associated with annulus gear 26 and reaction member 35.

CLAIMS

1. A power pack for a motor vehicle, comprising a prime mover, a change-speed gear box, a clutch housing (10) between and connected to the prime mover and change-speed gear box, and a clutch (14-20) having an associated change-speed gearing (22 - 26) arranged in series between the prime mover and gear box, characterised in that said associated change-speed gearing is disposed in the clutch housing with the clutch (14 - 20) between said gearing and gear box.

2. A power pack according to Claim 1 further characterised in that said change speed gearing (22-26) is incorporated in a flywheel assembly (11,12) connected to a main output shaft (28) of the prime mover.

3. A power pack according to Claim 2 further characterised in that said change speed gearing (22-26) provides for said flywheel (11) to be driven at the same speed as said main output shaft (28) or at a higher speed.

4. A power pack according to any one of the preceding claims further characterised in that said change-speed gearing (22-26) comprises an epicyclic gear train, and there is provided control means (32) operable selectively to connect two members (22-26) of the train together and to prevent one member (22) of the train from rotating.

5. A power pack according to Claim 4 further characterised in that said change-speed gearing (22-26) and control means (32) therefor are disposed in an oil tight enclosure (37) defined in part by said flywheel (11).

0108551

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 297 985 (A.C. WICKMAN) * Complete document * | 1,4 | B 60 K 17/00 |
| A | DE-A-2 461 108 (GKN TRANSMISSIONS LTD.) * Page 1, line 1 - page 4, line 22; page 8, line 1 - page 12, line 33; figures 1, 2, 6 * | 1 | |
| A | DE-A-2 945 357 (YANMAR DIESEL ENGINE CO. LTD.) * Page 5, lines 1-7; page 6, line 16 - page 8, line 12; figure 1 * | 2,5 | |
| A | FR-A-1 347 067 (AUTO TRANSMISSION LTD.) * Page 3, right-hand column, line 33 - page 4, left-hand column, line 40; figures 3, 4 * | | TECHNICAL FIELDS SEARCHED (Int. Cl. ³) B 60 K 17/00 |
| A | FR-A-1 023 588 (G. FLEISCHEL) | | |

| The present search report has been drawn up for all claims | | |
|---|---|---|
| Place of search BERLIN | Date of completion of the search 06-01-1984 | Examiner PETTI P |